# EUROPÄISCHE PATENTSCHRIFT

(11) **EP 2 248 651 B1**
(45) Veröffentlichungstag und Bekanntmachung des Hinweises auf die Patenterteilung: **19.06.2013**
(21) Anmeldenummer: 10004196.1
(22) Anmeldetag: 20.04.2010
(51) Int. Cl.: B29C 45/17

(54) **Spritzgießmaschine und Verfahren zum Betreiben einer solchen**
Injection moulding machine and method for operating the same
Machine de moulage par injection et son procédé de fonctionnement

(30) Priorität: 08.05.2009 DE 102009020376
(43) Veröffentlichungstag der Anmeldung: 10.11.2010
(73) Patentinhaber: Wittmann Battenfeld GmbH, 2542 Kottingbrunn (AT)
(72) Erfinder: Tinschert, Georg, A-4311 Schwertberg (AT); Lechner, Andreas, A- 2563 Pottenstein (AT); Schaly, Gerhard, A - 2542 Kottingbrunn (AT)
(74) Vertreter: Gosdin, Michael

(56) Entgegenhaltungen:
- DE-A1- 4 446 692
- DE-A1- 19 710 412
- DE-A1-102006 026 608
- DE-T5-112007 001 463
- JP-A- 61 060 253

## Beschreibung

Die Erfindung betrifft eine Spritzgießmaschine, umfassend ein Maschinenbett, auf dem eine feste Werkzeugaufspannplatte angeordnet ist, wobei auf dem Maschinenbett weiterhin eine verschiebbare Werkzeugaufspannplatte angeordnet ist, die relativ zu der festen Werkzeugaufspannplatte in eine Schließrichtung verschieblich ist, wobei an der einen Werkzeugaufspannplatte in vier Eckbereichen der Werkzeugaufspannplatte vier Holme befestigt sind, die zur Aufbringung einer Werkzeugschließkraft relativ zur anderen Werkzeugaufspannplatte mittels Verriegelungsmitteln verriegelbar sind, wobei in der Werkzeugaufspannplatte, in der die Verriegelungsmittel nicht angeordnet sind, Mittel zur Aufbringung der Werkzeugschließkraft angeordnet sind, die zwischen der Werkzeugaufspannplatte und den Holmen wirken, indem der jeweilige Holm relativ zur Werkzeugaufspannplatte bei geschlossenen Verriegelungsmitteln in Schließrichtung um einen Verschiebeweg verschoben wird. Des Weiteren betrifft die Erfindung ein Verfahren zum Betreiben einer Spritzgießmaschine.

Spritzgießmaschinen dieser Bauart werden als Zwei-Platten-Maschinen bezeichnet und haben den Vorteil, dass auf eine (dritte) Platte verzichtet werden kann, wie es der typischen Bauart einer Spritzgießmaschine entspricht. Das Maschinenkonzept kommt vor allem für größere und große Bauformen von Spritzgießmaschinen in Betracht. Eine gattungsgemäße Spritzgießmaschine ist beispielsweise aus der DE 103 23 309 B4 oder aus der DE 10 2006 026 608 A1 bekannt. Lösungen mit Holmziehvorrichtung offenbaren die DE 10 2006 026 608 A1, die DE 44 46 692 A1, die DE 197 10 412 A1, die JP 61 060 253 A und die DE 11 2007 001 463 T5.

Wie bei klassischen Drei-Platten-Spritzgießmaschinen auch, kann der Ein- und Ausbau des Spritzgießwerkzeugs in die bzw. aus der Spritzgießmaschine relativ aufwändig sein, wenn das Werkzeug entsprechend große Abmessungen aufweist. Es ist nämlich ohne größeren Aufwand bei Schließeinheiten in der 4-Holm-Bauweise in der Regel nicht möglich, Werkzeuge ein- und auszubauen, die in einer Dimension größer sind als der lichte Abstand zwischen den Holmen. Daher sind Holmziehvorrichtungen bekannt, die einen Holm nach seiner Lösung aus dem Raum zwischen den beiden Werkzeugaufspannplatten herausziehen können. Hierzu muss allerdings zumeist die Druckdose, die die Schließkraft erzeugt, komplett abgebaut oder auf einem Schlitten verfahren werden. Alternativ kann es erforderlich sein, den Holm per Hand auszubauen.

Der Erfindung liegt daher die **Aufgabe** zugrunde, eine Spritzgießmaschine der eingangs genannten Art, also eine Zwei-Platten-Maschine, so auszuführen, dass es möglich wird, in einfacherer Weise einen Werkzeugwechsel zu ermöglichen, d. h. ein Werkzeug ein- bzw. auszubauen. Des Weiteren wird angestrebt, dass beim Spritzgießen besonders großer Formteile auch eine einfachere Herstellung bzw. Handhabung möglich wird.

Die Lösung dieser Aufgabe durch die Erfindung ist dadurch gekennzeichnet, dass mindestens eines der Mittel zur Aufbringung der Werkzeugschließkraft zur Zurücklegung eines Verschiebeweges ausgebildet ist, der größer ist als der Verschiebeweg der anderen Mittel zur Aufbringung der Werkzeugschließkraft.

Der größere Verschiebeweg der Mittel zur Aufbringung der Werkzeugschließkraft ist dabei zumeist mindestens doppelt so groß, wie der Verschiebeweg der anderen Mittel zur Aufbringung der Werkzeugschließkraft, vorzugsweise mindestens fünf Mal oder sogar mindestens zehn Mal so groß.

Vorzugsweise steht nur ein einziger Holm (von insgesamt vier Holmen) mit dem Mittel zur Aufbringung der Werkzeugschließkraft mit vergrößertem Verschiebeweg in Verbindung. Dabei ist bevorzugt vorgesehen, dass es ein im oberen Maschinenbereich angeordneter Holm ist, der mit dem Mittel zur Aufbringung der Werkzeugschließkraft mit vergrößertem Verschiebeweg in Verbindung steht. Es ist jedoch auch möglich, dass mehr als nur ein Holm mit dem Mittel zur Aufbringung der Werkzeugschließkraft mit vergrößertem Verschiebeweg in Verbindung steht. In diesem Falle kommen bevorzugt die beiden oberen Holme in Betracht. Es können im gegebenen Falle auch noch mehr als zwei Holme entsprechend ausgestattet werden.

Die Mittel zur Aufbringung der Werkzeugschließkraft sind vorzugsweise als hydraulische Druckdosen bzw. hydraulische Kolben-Zylinder-Einheiten ausgebildet.

Gemäß einer Weiterbildung sind mehrere Verriegelungsmittel der Spritzgießmaschine mit Kopplungsmitteln versehen, die eine synchrone Betätigung der Verriegelungsmittel ermöglichen.

Das vorgeschlagene Verfahren zum Betreiben einer Spritzgießmaschine setzt die oben genannte Spritzgießmaschine ein und arbeitet zunächst in klassischer Weise, d. h. es weist die Schritte auf:
a) Zusammenfahren der beiden Werkzeugaufspannplatten mit an diesen angeordneten Werkzeughälften mittels mindestens eines Fahrzylinders;
b) Verriegeln der Holme mittels der Verriegelungsmittel mit der die Holme nicht tragenden Werkzeugaufspannplatte;
c) Verspannen der Werkzeugaufspannplatten und damit der Werkzeughälften mit den Mitteln zur Aufbringung der Werkzeugschließkraft;
d) Einspritzen von Kunststoffschmelze in die Kavität des Werkzeugs;
e) Verfestigenlassen der eingespritzten Kunststoffschmelze in der Kavität des Werkzeugs;
f) Abbauen der Werkzeugschließkraft mit den Mitteln zur Aufbringung der Werkzeugschließkraft;
g) Entriegeln der Holme mittels der Verriegelungsmittel;
h) Auseinanderfahren der beiden Werkzeugaufspannplatten und damit der Werkzeughälften mit dem mindestens einen Fahrzylinder;
i) Entnehmen des spritzgegossenen Formteils aus dem Werkzeug.

Gemäß der Erfindung ist dann jedoch vorgesehen, dass mindestens eines der Mittel zur Aufbringung der Werkzeugschließkraft zur Zurücklegung eines Verschiebeweges ausgebildet ist, der größer ist als der Verschiebeweg der anderen Mittel zur Aufbringung der Werkzeugschließkraft, wobei nach der Entriegelung des mit diesem Mittel in Verbindung stehenden Holms gemäß Schritt g) und/oder während des Auseinanderfahrens der Werkzeugaufspannplatten gemäß Schritt h) und/oder vor dem Entnehmen des spritzgegossenen Formteils gemäß Schritt i) der mit dem Mittel verbundene Holm über den Verschiebeweg der anderen Holme hinaus mit dem Mittel zur Aufbringung der Werkzeugschließkraft mit vergrößertem Verschiebeweg aus dem Raum zwischen den beiden Werkzeugaufspannplatten zumindest teilweise heraus gefahren wird.

Der mit dem Mittel zur Zurücklegung des vergrößerten Verschiebeweges verbundene Holm kann dabei bereits während des Verfestigenlassens gemäß Schritt e) entriegelt werden und über den Verschiebeweg der anderen Holme hinaus aus dem Raum zwischen den beiden Werkzeugaufspannplatten zumindest teilweise heraus gefahren werden.

Möglich ist es ferner, dass der mit dem Mittel zur Zurücklegung des vergrößerten Verschiebeweges verbundene Holm auf ein Maß aus dem Raum zwischen den beiden Werkzeugaufspannplatten heraus gefahren wird, das ein störkantenfreies Entnehmen des Formteils zulässt.

Mit dem Erfindungsvorschlag wird eine relativ kurze Bauform der Spritzgießmaschine möglich bzw. es bleibt eine kurze Bauform erhalten, was sich durch die vorgesehene Verriegelung der Holme in einer der beiden Werkzeugaufspannplatten ergibt. In vorteilhafter Weise wird durch den erfindungsgemäßen Aufbau der Spritzgießmaschine ein Werkzeugwechsel in sehr einfacher Weise möglich, da der störende Holm problemlos aus dem Bereich zwischen den Werkzeugaufspannplatten herausgefahren werden kann, zumindest soweit, dass er keine Behinderung für das seitlich oder von oben zu- oder abgeführte Werkzeug darstellt. Damit kann auch ein Werkzeugwechsel in einfacher Weise erfolgen, wenn die Werkzeugabmessungen über der lichten Weite zwischen den Holmen liegen.

Es kann in vorteilhafter Weise auf Holmziehvorrichtungen oder ähnliche Bauteile verzichtet werden, mit denen der Holm temporär aus dem Bereich zwischen den Werkzeugaufspannplatten entfernt werden kann.

Vielmehr erlaubt die verlängerte Druckdose an einem der Holme eine einfache und schnelle Vorbereitung der Spritzgießmaschine auf einen Werkzeugwechsel. Damit ergibt sich die Möglichkeit, auch größere Werkzeuge schnell und effizient ein- oder ausbauen zu können, ohne einen hohen Kosten- und/oder Zeitaufwand zu haben.

Welche der vier Druckdosen für das Spannen der vier Holme für einen verlängerten Öffnungshub ausgebildet wird, ist grundsätzlich beliebig wählbar. Es kann auch vorgesehen werden, dass zwei Druckdosen bzw. zwei Holme für eine verlängerte Öffnungsbewegung ausgestattet werden.

Beim üblichen Einbau eines Werkzeugs in die Spritzgießmaschine mittels eines Krans muss das Werkzeug über die Störkontur des oberen Holmes angehoben werden. Ist die Hallenhöhe nicht ausreichend, kann das Werkzeug sehr einfach von hinten eingebaut werden, wenn der hintere obere Holm verfahren wird. Nach dem Einbau des Werkzeugs kann der eine Holm, der aus dem Raum zwischen den beiden Werkzeugaufspannplatten jedenfalls teilweise herausgefahren wurde, in die Ausgangsposition zurückgefahren werden, so dass die Maschine wieder betriebsbereit ist. Es ist somit keine Klemmung, Verschiebeeinheit oder Demontage irgendwelcher Teile der Spritzgießmaschine erforderlich. Der Holm wird lediglich (vorzugsweise hydraulisch) wieder in seine Ursprungsposition zurückgefahren.

Es besteht verfahrensgemäß die zusätzliche Möglichkeit, einen Holm bei jedem Spritzgießzyklus - eventuell bereits während der Kühlzeit - in die ausgefahrene bzw. zurückgefahrene Stellung zu bringen und dann bei der Werkzeug-Öffnung das Formteil ohne störende Holme diagonal aus dem Werkzeug bzw. aus der Spritzgießmaschine zu entnehmen. Dabei ist der Vorteil gegeben, dass auch Formteile, die größer sind als das lichte Maß zwischen den Holmen, automatisch und problemlos mit einem Roboter in jede freie Richtung entnommen werden können.

In der Zeichnung ist ein Ausführungsbeispiel der Erfindung dargestellt. Es zeigen:
- Fig. 1: schematisch die Seitenansicht einer Spritzgießmaschine, die als Zwei-Platten-Maschine ausgeführt ist, während ihres normalen Spritzgießbetriebes, und
- Fig. 2: die Seitenansicht der Spritzgießmaschine gemäß Fig. 1 während des Wechsels des Spritzgießwerkzeugs.

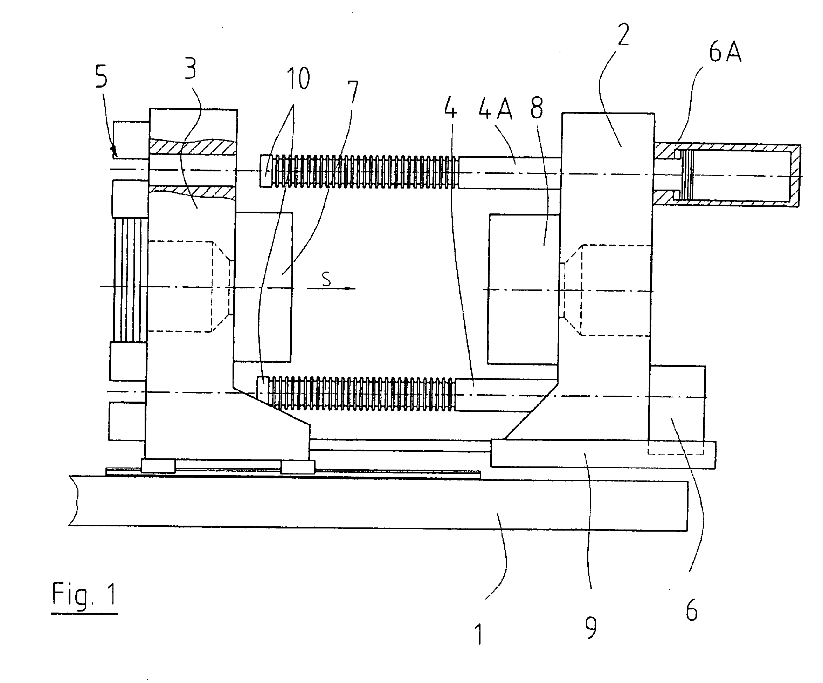

In Fig. 1 ist eine Spritzgießmaschine dargestellt, die ein Maschinenbett 1 aufweist, auf der eine feste Werkzeugaufspannplatte 2 (Düsenplatte) fest angeordnet ist. Weiterhin ist eine verschiebbare Werkzeugaufspannplatte 3 (Schließplatte) auf dem Maschinenbett 1 verschieblich angeordnet, die in Schließrichtung S auf dem Maschinenbett 1 verfahren kann. Die Verfahrbewegung der Werkzeugaufspannplatte 3 erfolgt über mindestens einen Fahrzylinder 9.

An der festen Werkzeugaufspannplatte 2 sind Holme 4, 4A angeordnet, wobei der endseitige Bereich 10 der Holme 4, 4A beim Zusammenfahren der beiden Werkzeugaufspannplatte 2, 3 in Bohrungen in der verschiebbaren Werkzeugaufspannplatte 3 eintaucht.

Durch Verriegelungsmittel 5, die in Fig. 1 nicht näher dargestellt sind, werden dann die Holme 4, 4A mit der Werkzeugaufspannplatte 3 verriegelt. Kurzhubzylinder 6, 6A, die in der Werkzeugaufspannplatte 2 integriert sind, können dann die Werkzeugschließkraft aufbringen, d. h. die beiden Werkzeughälften 7 und 8 verspannen.

Dabei sind vier Holme 4, 4A vorgesehen, die in vier Eckbereichen der festen Werkzeugaufspannplatte 2 - in an sich bekannter Weise - positioniert sind.

Im normalen Spritzgießbetrieb werden die beiden Werkzeugaufspannplatten 2, 3 mittels des Fahrzylinders 9 zusammen und auseinander gefahren. Im zusammengefahrenen Zustand erfolgt die Verriegelung der endseitigen Bereiche 10 der Holme 4, 4A mit der verschiebbaren Werkzeugaufspannplatte 3 mittels der Verriegelungsmittel 5.

An welcher Werkzeugaufspannplatte 2, 3 die Holme 4, 4A befestigt und die Verriegelung angeordnet ist, ist nicht zwingend. Bevorzugt trägt die feste Werkzeugaufspannplatte 2 die Holme 4, 4A, während die verschiebbare Werkzeugaufspannplatte 2 die Verrieglung trägt.

Wesentlich ist nunmehr, dass Vorkehrungen getroffen sind, um den Werkzeugwechsel in sehr einfacher Weise zu ermöglichen.

Hierzu ist vorgesehen, dass mindestens eines der Mittel 6A zur Aufbringung der Werkzeugschließkraft zur Zurücklegung eines Verschiebeweges ausgebildet ist, der größer ist als der Verschiebeweg der anderen Mittel 6 zur Aufbringung der Werkzeugschließkraft. D. h. eine der vier Druckdosen 6, 6A ist ausgelegt, um nicht nur den kurzen Hub zu erzeugen, der für die Schließkraftaufbringung erforderlich ist, sondern die Druckdose 6A kann darüber hinaus einen relativ großen Hub fahren, der meist mindestens das Zehnfache des Hub der anderen Druckdosen 6 beträgt.

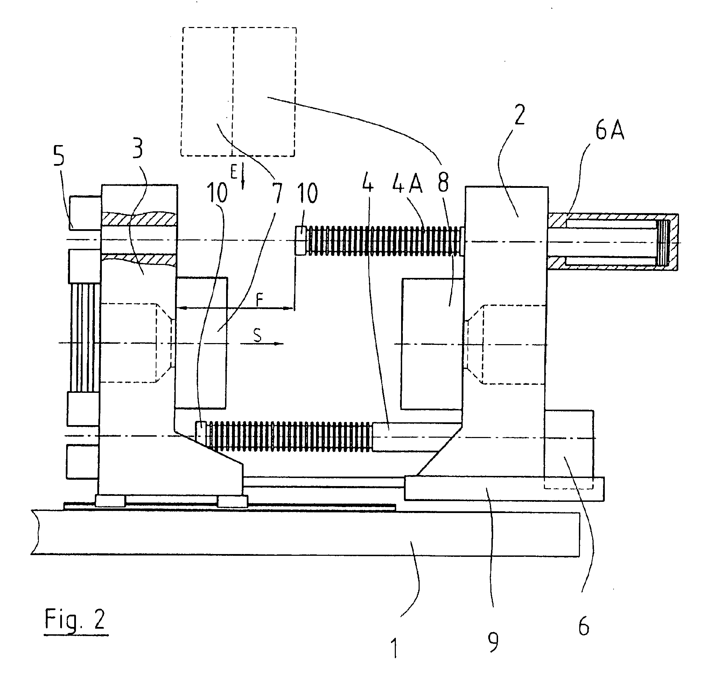

Wie aus Fig. 2 ersichtlich ist, kann damit erreicht werden, dass einer der beiden oberen Holme 4A (von denen in Fig. 2 nur einer dargestellt ist) aus dem Raum zwischen den beiden Werkzeugaufspannplatten 2, 3 herausgezogen werden kann, so dass zwischen dem endseitigen Bereich 10 des Holms 4A und der verschiebbaren Werkzeugaufspannplatte 3 ein Öffnungsmaß F vorliegt, das größer ist als die Breite des Werkzeugs 7, 8 in Schließrichtung S gemessen.

Demgemäß kann das Werkzeug 7, 8 beim Werkzeugwechsel in einfacher Weise in die Spritzgießmaschine, d. h. zwischen die beiden Werkzeugaufspannplatten 2, 3 eingesetzt werden, ohne weitere Vorkehrungen treffen zu müssen (wie z. B. den Ausbau des Holms 4A). Die Werkzeugeinbaurichtung ist mit E gekennzeichnet und gibt an, dass das Werkzeug 7, 8 quer zur Schließrichtung S eingeführt wird, um die beiden Werkzeughälften 7, 8 an den entsprechenden Werkzeugaufspannplatten 2, 3 zu montieren.

### Bezugszeichenliste:

- 1: Maschinenbett
- 2: feste Werkzeugaufspannplatte (Düsenplatte)
- 3: verschiebbare Werkzeugaufspannplatte (Schließplatte)
- 4: Holm
- 4A: Holm
- 5: Verriegelungsmittel
- 6: Mittel zur Aufbringung der Werkzeugschließkraft
- 6A: Mittel zur Aufbringung der Werkzeugschließkraft
- 7: Werkzeughälfte
- 8: Werkzeughälfte
- 9: Fahrzylinder
- 10: endseitiger Bereich des Holms

- S: Schließrichtung
- E: Werkzeugeinbaurichtung
- F: Öffnungsmaß des Holms

## Patentansprüche

1. Spritzgießmaschine, umfassend ein Maschinenbett (1), auf dem eine feste Werkzeugaufspannplatte (2) angeordnet ist, wobei auf dem Maschinenbett (1) weiterhin eine verschiebbare Werkzeugaufspannplatte (3) angeordnet ist, die relativ zu der festen Werkzeugaufspannplatte (2) in eine Schließrichtung (S) verschieblich ist, wobei an der einen Werkzeugaufspannplatte (2) in vier Eckbereichen der Werkzeugaufspannplatte (2) vier Holme (4, 4A) befestigt sind, die zur Aufbringung einer Werkzeugschließkraft relativ zur anderen Werkzeugaufspannplatte (3) mittels Verriegelungsmitteln (5) verriegelbar sind, wobei in der Werkzeugaufspannplatte (2), in der die Verriegelungsmittel (5) nicht angeordnet sind, Mittel (6, 6A) zur Aufbringung der Werkzeugschließkraft angeordnet sind, die zwischen der Werkzeugaufspannplatte (2) und den Holmen (4, 4A) wirken, indem der jeweilige Holm (4, 4A) relativ zur Werkzeugaufspannplatte (2) bei geschlossenen Verriegelungsmitteln (5) in Schließrichtung (S) um einen Verschiebeweg verschoben wird,
**dadurch gekennzeichnet,**
**dass** mindestens eines der Mittel (6A) zur Aufbringung der Werkzeugschließkraft zur Zurücklegung eines Verschiebeweges ausgebildet ist, der größer ist als der Verschiebeweg der anderen Mittel (6) zur Aufbringung der Werkzeugschließkraft.

2. Spritzgießmaschine nach Anspruch 1, **dadurch gekennzeichnet, dass** der größere Verschiebeweg der Mittel (6A) zur Aufbringung der Werkzeugschließkraft mindestens doppelt so groß ist, wie der Verschiebeweg der anderen Mittel (6) zur Aufbringung der Werkzeugschließkraft, vorzugsweise mindestens fünf Mal so groß.

3. Spritzgießmaschine nach Anspruch 2, **dadurch gekennzeichnet, dass** der größere Verschiebeweg der Mittel (6A) zur Aufbringung der Werkzeugschließkraft mindestens zehn Mal so groß ist, wie der Verschiebeweg der anderen Mittel (6) zur Aufbringung der Werkzeugschließkraft.

4. Spritzgießmaschine nach einem der Ansprüche 1 bis 3, **dadurch gekennzeichnet, dass** nur ein einziger Holm (4A) mit dem Mittel (6A) zur Aufbringung der Werkzeugschließkraft mit vergrößertem Verschiebeweg in Verbindung steht.

5. Spritzgießmaschine nach Anspruch 4, **dadurch gekennzeichnet, dass** es ein im oberen Maschinenbereich angeordneter Holm (4A) ist, der mit dem Mittel (6A) zur Aufbringung der Werkzeugschließkraft mit vergrößertem Verschiebeweg in Verbindung steht.

6. Spritzgießmaschine nach einem der Ansprüche 1 bis 3, **dadurch gekennzeichnet, dass** zwei Holme (4A) mit dem Mittel (6A) zur Aufbringung der Werkzeugschließkraft mit vergrößertem Verschiebeweg in Verbindung stehen.

7. Spritzgießmaschine nach einem der Ansprüche 1 bis 3, **dadurch gekennzeichnet, dass** mehr als zwei Holme (4A) mit dem Mittel (6A) zur Aufbringung der Werkzeugschließkraft mit vergrößertem Verschiebeweg in Verbindung stehen.

8. Spritzgießmaschine nach einem der Ansprüche 1 bis 7, **dadurch gekennzeichnet, dass** die Mittel (6, 6A) zur Aufbringung der Werkzeugschließkraft als hydraulische Druckdosen bzw. hydraulische Kolben-Zylinder-Einheiten ausgebildet sind.

9. Spritzgießmaschine nach einem der Ansprüche 1 bis 8, **dadurch gekennzeichnet, dass** mehrere Verriegelungsmittel (5) der Spritzgießmaschine mit Kopplungsmitteln versehen sind, die eine synchrone Betätigung der Verriegelungsmittel (5) ermöglichen.

10. Verfahren zum Betreiben einer Spritzgießmaschine, die umfasst: ein Maschinenbett (1), auf dem eine feste Werkzeugaufspannplatte (2) angeordnet ist, wobei auf dem Maschinenbett (1) weiterhin eine verschiebbare Werkzeugaufspannplatte (3) angeordnet ist, die relativ zu der festen Werkzeugaufspannplatte (2) in eine Schließrichtung (S) verschieblich ist, wobei an der einen Werkzeugaufspannplatte (2) in vier Eckbereichen der Werkzeugaufspannplatte (2) vier Holme (4, 4A) befestigt sind, die zur Aufbringung einer Werkzeugschließkraft relativ zur anderen Werkzeugaufspannplatte (3) mittels Verriegelungsmitteln (5) verriegelbar sind, wobei in der Werkzeugaufspannplatte (2), in der die Verriegelungsmittel (5) nicht angeordnet sind, Mittel (6, 6A) zur Aufbringung der Werkzeugschließkraft angeordnet sind, die zwischen der Werkzeugaufspannplatte (2) und den Holmen (4, 4A) wirken, indem der jeweilige Holm (4, 4A) relativ zur Werkzeugaufspannplatte (2) bei geschlossenen Verriegelungsmitteln (5) in Schließrichtung (S) um einen Verschiebeweg verschoben wird, wobei das Verfahren die Schritte aufweist:
a) Zusammenfahren der beiden Werkzeugaufspannplatten (2, 3) mit an diesen angeordneten Werkzeughälften (7, 8) mittels mindestens eines Fahrzylinders (9);
b) Verriegeln der Holme (4, 4A) mittels der Verriegelungsmittel (5) mit der die Holme (4, 4A) nicht tragenden Werkzeugaufspannplatte (3);
c) Verspannen der Werkzeugaufspannplatten (2, 3) und damit der Werkzeughälften (7, 8) mit den Mitteln (6, 6A) zur Aufbringung der Werkzeugschließkraft;
d) Einspritzen von Kunststoffschmelze in die Kavität des Werkzeugs (7, 8);
e) Verfestigenlassen der eingespritzten Kunststoffschmelze in der Kavität des Werkzeugs (7, 8);
f) Abbauen der Werkzeugschließkraft mit den Mitteln (6, 6A) zur Aufbringung der Werkzeugschließkraft;
g) Entriegeln der Holme (4, 4A) mittels der Verriegelungsmittel (5);
h) Auseinanderfahren der beiden Werkzeugaufspannplatten (2, 3) und damit der Werkzeughälften (7, 8) mit dem mindestens einen Fahrzylinder (9);
i) Entnehmen des spritzgegossenen Formteils aus dem Werkzeug (7, 8),
**dadurch gekennzeichnet,**
**dass** mindestens eines der Mittel (6A) zur Aufbringung der Werkzeugschließkraft zur Zurücklegung eines Verschiebeweges ausgebildet ist, der größer ist als der Verschiebeweg der anderen Mittel (6) zur Aufbringung der Werkzeugschließkraft, wobei nach der Entriegelung des mit diesem Mittel (6A) in Verbindung stehenden Holms (4A) gemäß Schritt g) und/oder während des Auseinanderfahrens der Werkzeugaufspannplatten (2, 3) gemäß Schritt h) und/oder vor dem Entnehmen des spritzgegossenen Formteils gemäß Schritt i) der mit dem Mittel (6A) verbundene Holm (4A) über den Verschiebeweg der anderen Holme (4) hinaus mit dem Mittel (6A) zur Aufbringung der Werkzeugschließkraft mit vergrößertem Verschiebeweg aus dem Raum zwischen den beiden Werkzeugaufspannplatten (2, 3) zumindest teilweise heraus gefahren wird.

11. Verfahren nach Anspruch 10, **dadurch gekennzeichnet, dass** der mit dem Mittel (6A) zur Zurücklegung des vergrößerten Verschiebeweges verbundene Holm (4A) bereits während des Verfestigenlassens gemäß Schritt e) entriegelt wird und über den Verschiebeweg der anderen Holme (4) hinaus aus dem Raum zwischen den beiden Werkzeugaufspannplatten (2, 3) zumindest teilweise heraus gefahren wird.

12. Verfahren nach Anspruch 10 oder 11, **dadurch gekennzeichnet, dass** der mit dem Mittel (6A) zur Zurücklegung des vergrößerten Verschiebeweges verbundene Holm (4A) auf ein Maß aus dem Raum zwischen den beiden Werkzeugaufspannplatten (2, 3) heraus gefahren wird, das ein störkantenfreies Entnehmen des Formteils zulässt.

## Claims

1. Injection moulding machine, comprising a machine base (1) on which a stationary platen (2) is arranged, wherein furthermore a moving platen (3) is arranged on the machine base (1) which is movable relatively to the stationary platen (3) in a closure direction (S), wherein four bars (4, 4A) are fixed at one of the platens (2) in four corner regions of the platen (2) which are lockable relatively to the other platen (3) by means of locking means (5) for applying of a mould closing force, wherein means (6, 6A) for applying the mould closing force are arranged in the platen (2) in which the locking means (5) are not arranged which act between the platen (2) and the bars (4, 4A) by moving the respective bar (4, 4A) relatively to the platen (2) with closed locking means (5) in closing direction (S) by a displacement distance,
**characterized in**
**that** at least one of the means (6A) for applying the mould closing force is designed for travelling of a displacement distance which is bigger than the displacement distance of the other means (6) for applying the mould closing force.

2. Injection moulding machine according claim 1, **characterized in that** the bigger displacement distance of the means (6A) for applying the mould closing force is at least two times the size of the displacement distance of the other means (6) for applying the mould closing force, preferably at least five times of the size.

3. Injection moulding machine according claim 2, **characterized in that** the bigger displacement distance of the means (6A) for applying the mould closing force is at least ten times the size of the displacement distance of the other means (6) for applying the mould closing force.

4. Injection moulding machine according to one of claims 1 to 3, **characterized in that** only one single bar (4A) is connected with the means (6A) for applying the mould closing force with enlarged displacement distance.

5. Injection moulding machine according to claim 4, **characterized in that** it is a bar (4A) arranged in the upper machine region which is connected with the means (6A) for applying the mould closing force with enlarged displacement distance.

6. Injection moulding machine according to one of claims 1 to 3, **characterized in that** two bars (4A) are connected with the means (6A) for applying the mould closing force with enlarged displacement distance.

7. Injection moulding machine according to one of claims 1 to 3, **characterized in that** more than two bars (4A) are connected with the means (6A) for applying the mould closing force with enlarged displacement distance.

8. Injection moulding machine according to one of claims 1 to 7, **characterized in that** the means (6A) for applying the mould closing force are designed as hydraulic force cartridges and hydraulic piston-cylinder-units respectively.

9. Injection moulding machine according to one of claims 1 to 8, **characterized in that** several locking means (5) of the injection moulding machine are arranged with coupling means which allow a synchronous actuation of the locking means (5).

10. Method for the operation of an injection moulding machine, which comprises: a machine base (1) on which a stationary platen (2) is arranged, wherein furthermore a moving platen (3) is arranged on the machine base (1) which is movable relatively to the stationary platen (3) in a closure direction (S), wherein four bars (4, 4A) are fixed at one of the platens (2) in four corner regions of the platen (2) which are lockable relatively to the other platen (3) by means of locking means (5) for applying of a mould closing force, wherein means (6, 6A) for applying the mould closing force are arranged in the platen (2) in which the locking means (5) are not arranged which act between the platen (2) and the bars (4, 4A) by moving the respective bar (4, 4A) relatively to the platen (2) with closed locking means (5) in closing direction (S) by a displacement distance, wherein the method comprises the steps:
a) Moving together the two platens (2, 3) and the mould halfs (7, 8) which are arranged at the same by means of at least one driving cylinder (9);
b) Locking of the bars (4, 4A) with the platen (3) which does not bear the bars (4, 4A) by means of the locking means (5);
c) Clamping of the platen (2, 3) and thus the mould halfs (7, 8) with the means (6, 6A) for applying the mould closing force;
d) Injection of plastic melt into the cavity of the mould (7, 8);
e) Letting solidify of the injected plastic melt in the cavity of the mould (7, 8);
f) Releasing of the mould closing force with the means (6, 6A) for applying the mould closing force;
g) Unlocking of the bars (4, 4A) by means of the locking means (5);
h) Moving apart of the two platens (2, 3) and thus of the mould halfs (7, 8) by means of the at least one driving cylinder (9);
j) Removing of the injection moulded part from the mould (7, 8),
**characterized in**
**that** at least one of the means (6A) for applying the mould closing force is designed for travelling of a displacement distance which is bigger than the displacement distance of the other means (6) for applying the mould closing force, wherein after unlocking of the bar (4A) which is in connection with those means (6A) according step g) and/or during the moving apart of the platens (2, 3) according step h) and/or prior to the removing of the injection moulded part according step i) the bar (4A) which is connected with the means (6A) is at least partially driven out of the space between the two platens (2, 3) beyond the displacement distance of the other bars (4) by means (6A) for applying the mould closing force with enlarged displacement distance.

11. Method according to claim 10, **characterized in that** the bar (4A) which is connected with the means (6A) for travelling of the enlarged displacement distance is already unlocked during letting solidify according to step e) and is at least partially driven out of the space between the two platens (2, 3) beyond the displacement distance of the other bars (4).

12. Method according to claim 10 or 11, **characterized in that** the bar (4A) which is connected with the means (6A) for travelling of the enlarged displacement distance is driven out of the space between the two platens (2, 3) in such a manner that a removing of the injection moulded part is allowed which is free from interfering edges.

## Revendications

1. Machine de moulage par injection, comprenant un banc de machine (1) sur lequel est disposé un plateau de serrage d'outil fixe (2), un plateau de serrage d'outil mobile (3) étant en outre disposé sur le banc de machine (1), lequel peut être déplacé par rapport au plateau de serrage d'outil fixe (2) dans une direction de fermeture (S), quatre longerons (4, 4A) étant fixés sur l'un des plateaux de serrage d'outil (2) dans quatre régions de coin du plateau de serrage d'outil (2), lesquels longerons peuvent être verrouillés par rapport à l'autre plateau de serrage d'outil (3) par le biais de moyens de verrouillage (5) pour appliquer une force de fermeture d'outil, des moyens (6, 6A) pour appliquer la force de fermeture d'outil étant disposés dans le plateau de serrage d'outil (2) dans lequel les moyens de verrouillage (5) ne sont pas disposés, lesquels moyens agissant entre le plateau de serrage d'outil (2) et les longerons (4, 4A) en déplaçant le longeron respectif (4, 4A) dans la direction de fermeture (S) suivant une certaine course de déplacement par rapport au plateau de serrage d'outil (2) lorsque les moyens de verrouillage (5) sont fermés,
**caractérisée en ce**
**qu'**au moins l'un des moyens (6A) pour appliquer la force de fermeture d'outil est réalisé pour parcourir une course de déplacement qui est supérieure à la course de déplacement des autres moyens (6) pour appliquer la force de fermeture d'outil.

2. Machine de moulage par injection selon la revendication 1, **caractérisée en ce que** la plus grande course de déplacement des moyens (6A) pour appliquer la force de fermeture d'outil est au moins deux fois plus grande que la course de déplacement des autres moyens (6) pour appliquer la force de fermeture d'outil, de préférence au moins cinq fois plus grande.

3. Machine de moulage par injection selon la revendication 2, **caractérisée en ce que** la plus grande course de déplacement des moyens (6A) pour appliquer la force de fermeture d'outil est au moins dix fois plus grande que la course de déplacement des autres moyens (6) pour appliquer la force de fermeture d'outil.

4. Machine de moulage par injection selon l'une quelconque des revendications 1 à 3, **caractérisée en ce que** seulement un longeron (4A) est en liaison avec le moyen (6A) pour appliquer la force de fermeture d'outil ayant la plus grande course de déplacement.

5. Machine de moulage par injection selon la revendication 4, **caractérisée en ce qu'**il y a un longeron (4A) disposé dans la région supérieure de la machine, lequel est en liaison avec le moyen (6A) pour appliquer la force de fermeture d'outil ayant la plus grande course de déplacement.

6. Machine de moulage par injection selon l'une quelconque des revendications 1 à 3, **caractérisée en ce que** deux longerons (4A) sont en liaison avec le moyen (6A) pour appliquer la force de fermeture d'outil ayant la plus grande course de déplacement.

7. Machine de moulage par injection selon l'une quelconque des revendications 1 à 3, **caractérisée en ce que** plus de deux longerons (4A) sont en liaison avec le moyen (6A) pour appliquer la force de fermeture d'outil ayant la plus grande course de déplacement.

8. Machine de moulage par injection selon l'une quelconque des revendications 1 à 7, **caractérisée en ce que** les moyens (6, 6A) pour appliquer la force de fermeture d'outil sont réalisés sous forme de récipients sous pression hydrauliques ou sous forme d'unités cylindre-piston hydrauliques.

9. Machine de moulage par injection selon l'une quelconque des revendications 1 à 8, **caractérisée en ce que** plusieurs moyens de verrouillage (5) de la machine de moulage par injection sont pourvus de moyens d'accouplement qui permettent un actionnement synchrone des moyens de verrouillage (5).

10. Procédé pour faire fonctionner une machine de moulage par injection qui comprend : un banc de machine (1) sur lequel est disposé un plateau de serrage d'outil fixe (2), un plateau de serrage d'outil mobile (3) étant en outre disposé sur le banc de machine (1), lequel peut être déplacé par rapport au plateau de serrage d'outil fixe (2) dans une direction de fermeture (S), quatre longerons (4, 4A) étant fixés sur l'un des plateaux de serrage d'outil (2) dans quatre régions de coin du plateau de serrage d'outil (2), lesquels longerons peuvent être verrouillés par rapport à l'autre plateau de serrage d'outil (3) par le biais de moyens de verrouillage (5) pour appliquer une force de fermeture d'outil, des moyens (6, 6A) pour appliquer la force de fermeture d'outil étant disposés dans le plateau de serrage d'outil (2) dans lequel les moyens de verrouillage (5) ne sont pas disposés, lesquels moyens agissant entre le plateau de serrage d'outil (2) et les longerons (4, 4A) en déplaçant le longeron respectif (4, 4A) dans la direction de fermeture (S) suivant une certaine course de déplacement par rapport au plateau de serrage d'outil (2) lorsque les moyens de verrouillage (5) sont fermés, le procédé comprenant les étapes suivantes :
a) déplacement l'un vers l'autre des deux plateaux de serrage d'outil (2, 3) avec des moitiés d'outil (7, 8) disposées sur ceux-ci, au moyen d'au moins un cylindre de déplacement (9) ;
b) verrouillage des longerons (4, 4A) par le biais des moyens de verrouillage (5) au plateau de serrage d'outil (3) ne portant pas les longerons (4, 4A) ;
c) serrage des plateaux de serrage d'outil (2, 3) et donc des moitiés d'outil (7, 8) avec les moyens (6, 6A) pour appliquer la force de fermeture d'outil ;
d) injection de plastique en fusion dans la cavité de l'outil (7, 8) ;
e) solidification du plastique en fusion injecté dans la cavité de l'outil (7, 8) ;
f) suppression de la force de fermeture d'outil avec les moyens (6, 6A) pour appliquer la force de fermeture d'outil ;
g) déverrouillage des longerons (4, 4A) au moyen des moyens de verrouillage (5) ;
h) écartement l'un de l'autre des deux plateaux de serrage d'outil (2, 3) et donc des moitiés d'outil (7, 8) avec l'au moins un cylindre de déplacement (9) ;
i) démoulage de la pièce moulée par injection hors de l'outil (7, 8),
**caractérisé en ce**
**qu'**au moins l'un des moyens (6A) pour appliquer la force de fermeture d'outil est réalisé pour parcourir une course de déplacement qui est supérieure à la course de déplacement des autres moyens (6) pour appliquer la force de fermeture d'outil, où, après le déverrouillage du longeron (4A) en liaison avec ce moyen (6A) selon l'étape g) et/ou pendant l'écartement l'un de l'autre des plateaux de serrage d'outil (2, 3) selon l'étape h) et/ou avant le démoulage de la pièce moulée par injection selon l'étape i), le longeron (4A) relié au moyen (6A) est au moins en partie déplacé au-delà de la course de déplacement des autres longerons (4) avec le moyen (6A) pour appliquer la force de fermeture d'outil avec une course de déplacement supérieure hors de l'espace entre les deux plateaux de serrage d'outil (2, 3).

11. Procédé selon la revendication 10, **caractérisé en ce que** le longeron (4A) relié au moyen (6A) pour parcourir la plus grande course de déplacement est déjà déverrouillé pendant la solidification selon l'étape e) et est au moins en partie déplacé au-delà de la course de déplacement des autres longerons (4) hors de l'espace entre les deux plateaux de serrage d'outil (2, 3).

12. Procédé selon la revendication 10 ou 11, **caractérisé en ce que** le longeron (4A) relié au moyen (6A) pour parcourir la plus grande course de déplacement est déplacé hors de l'espace entre les deux plateaux de serrage d'outil (2, 3) dans une mesure permettant un démoulage de la pièce moulée sans obstructions par des bords.
